(19) **Europäisches Patentamt**
**European Patent Office**
**Office européen des brevets**

(11) **EP 2 275 488 B1**

(12) **EUROPEAN PATENT SPECIFICATION**

(45) Date of publication and mention
of the grant of the patent:
**07.09.2011  Bulletin 2011/36**

(51) Int Cl.:
***C08L 61/06*** *(2006.01)*      ***C08L 63/04*** *(2006.01)*

(21) Application number: **09425283.0**

(22) Date of filing: **14.07.2009**

(54) **Mass for injection moulding based on thermosetting resins for moulded parts possessing a highly stable coefficient of static friction**

Masse zum Spritzgießen basierend auf wärmehärtenden Harzen für geformte Teile mit hochstabilem Haftreibungskoeffizient

Masse pour moulage par injection basée sur des résines thermodurcissables pour pièces moulées dotées d'un coefficient de friction statique très stable

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **30.06.2009  IT MI20091160**

(43) Date of publication of application:
**19.01.2011  Bulletin 2011/03**

(73) Proprietor: **Elchi S.p.A.**
**20138 Milano (IT)**

(72) Inventors:
• **Fantini, Corrado**
**20138 Milano (IT)**

• **Crespi, Ernestino**
**20015 Parabiago (MI) (IT)**
• **Franzini, Lucia**
**23033 Grosio (SO) (IT)**

(74) Representative: **Mocchetti, Ilio G.**
**Brevetti Dott. Ing. DiGiovanni Schmiedt S.r.l.**
**Via Aldrovandi, 7**
**(MM Lima)**
**I-20129 Milano (IT)**

(56) References cited:
**GB-A- 2 270 523**

## Description

Field of application of the invention

The present invention relates to the field of plastic materials and, more precisely, to a mass for injection moulding based on thermosetting resin for moulded parts possessing a highly stable coefficient of static friction.

The mass for injection moulding, subject of the invention, is particularly suited to realization of the sliding parts of braking systems, sealing systems, mechanical parts of electric components, moving mechanical parts of volume meters, etc.

Review of the known art

The evolution which plastic materials have undergone in recent decades has led to their increasing use in place of more costly materials, or instead of others that are difficult to obtain and handle. It is a well known fact that plastic materials are either thermoplastics or of a thermosetting composition: the first can be melted and remodelled several times, while the second can be moulded only once as they carbonize if reheated to above the moulding temperature. It is also well known that, when suitably reinforced, a thermosetting resin offers an excellent compromise between mechanical performance and costs.

Unsaturated polyester resin, a typical thermosetting resin, when reinforced with fibres, such as glass fibres, offers excellent resistance to impacts but has the disadvantage of a limited capacity for sliding one part over another. Melamine, another thermosetting resin, is distinguished by having a very hard surface and strong resistance to abrasion but, like polyester, its capacity for surface sliding is limited due to insufficient lubrication.

Phenolic resin on the contrary, if suitably reinforced, improves the sliding capacity of a surface subjected to continuous mechanical stress, offering better adherence between parts in contact. Its greater sliding capacity is due to the fact that this type of resin ensures a high degree of stability in the moulded product, both in the sense of chemical stability in any environment - aqueous / acid /basic / hydrocarbonic etc., and in the dimensional stability of its operative surface, in this way guaranteeing perfect adherence between moving parts.

In every field of application, including those mentioned above, inertia created by the moving parts must remain constant over time optimizing the precision of the systems that use it.

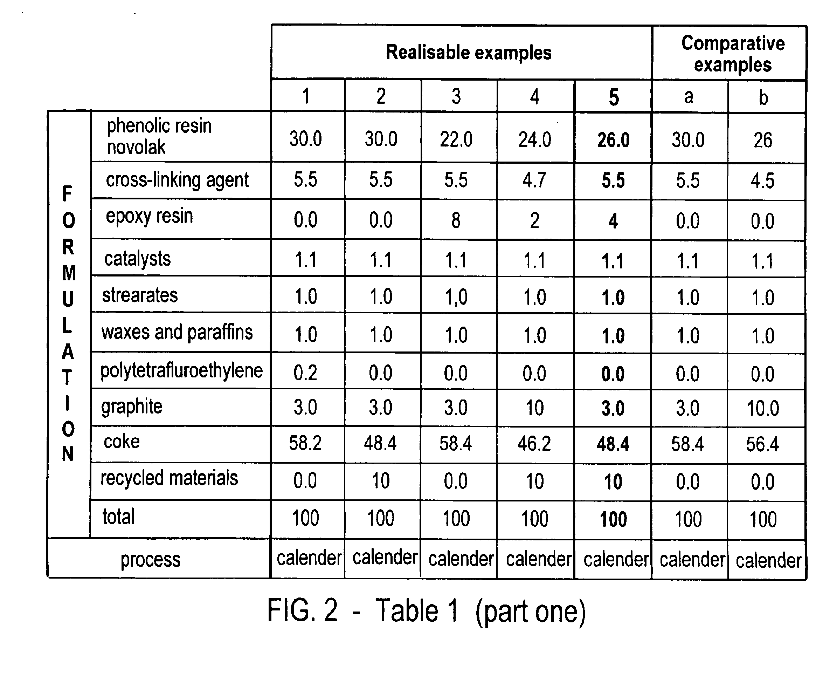

Two examples of well known formulations of masses for injection moulding possessing the sliding capacity of phenolic resins, are indicated by letters a̲ and b̲ in the last two columns of **Table 1** (part one), in **Figure 2**. Formulations a̲ and b̲ give the percentages by weight of each component of the respective masses for injection moulding. The purpose of studying the properties of products pertaining to formulations a̲ and b̲, is to have a reliable reference in order to compare the technical characteristics of the invention that will now be described. The technology used in the injection moulding process is that known as "transfer technology" which consists in injecting under pressure a mixture containing hot resins, in this case thermosetting resins, maintained in a plastic condition before and after injection to assist flow in the injection nozzle and while they are in contact with the walls of the mould, said walls being kept at a temperature slightly higher than that at which the resins begin to cross-link.

Formulations a̲ and b̲ are those actually used in production of the sliding parts, grids and valves, in all types of hydrocarbonic gas meters, industrial as well as domestic meters of Class G 4. The sliding parts obtained with the two formulations differ mainly as regards the greater surface hardness of formulation a̲ compared with that of formulation b̲.

To simulate operation over time, a series of tests had to be devised whereby moulded samples of one formulation were made to slide continuously against moulded samples of the other formulation; specifically formulations a̲ on b̲. At regular intervals measurements were taken of the coefficient of static friction $\mu_s$ (adimensional number) present at the interface between the above sliding parts.

To obtain a more accurate statistical evaluation, the test samples were divided into groups of about ten units each. Overall duration of the test and of the single measurement intervals can be inferred from the maximum capacity of a certain meter which, for a G4, was 6 $m^3$/h, equivalent to about 85 cycles per minute (UNI EN 1359), and therefore to 5,100 cycles/h. As regards any possible significant variation in the coefficient of static friction, the measurement interval was fixed at 500 hours, corresponding to 2.55 million cycles. For each group examined overall duration of the test was fixed at 5,000 hours corresponding to 25.5 million cycles. Every 500 hours the coefficient of static friction $\mu_s$ was measured in accordance with well-known methods that will be described further on. The test is also useful for measuring the coefficient of dynamic friction which is only slightly less than the coefficient of static friction measured throughout the whole test.

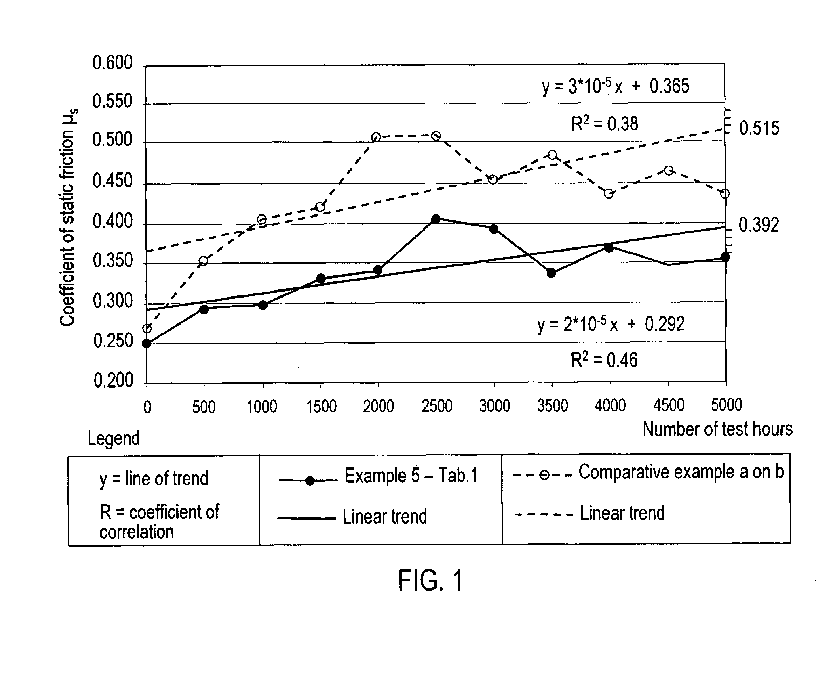

The test system includes connection of several test samples to a motor able to impose mechanical movement of the moving parts inside the gas meter, so coupled as to reproduce the forces in play that are the cause of wear. Working speeds were kept constant and adjusted according to the maximum speeds sustained from one time to the next by the type of operative unit being tested. In order to simulate real gas pressure on the internal chambers during the test, a downward force was imposed on the samples equivalent to the declared drop in pressure, considering a fluid of density equal to the hydrocarbon (usually methane) used at that rate of flow. The results of the experiments are given in the upper dotted curve in Figure 1. The values shown on the graph represent the group averages. The graph also shows the trend line (regression line) of the coefficient of static friction $\mu_s$ and the equation y(t) of the same line, as well as the quadratic value of the coefficient of correlation R of the experimental data. As may be noted, the curve of the trend line y(t) is positive and equal to $3 \times 10^{-5}$, which means that the coefficient of static friction $\mu_s$ increases over time with the trend indicated. The value of the intercept at the origin of the line y(t) is 0.365; the ultimate value after 5,000 hours of testing is 0.515, varying by 0.150 equal to 41% of the initial value. Such a variation of $\Delta\mu_s$ is quite considerable and unless calibration is done periodically, there may be equally serious errors in measurement. Statistical analysis of measuring errors, that occur where gas meters have been in use for a long time, shows that the error is markedly of the negative sign; in other words the volume of gas measured is less than the quantity actually distributed. In view of what has been said above, this is partly due to the increase, over time, of resistance to sliding that affects the mechanical parts in contact with one another. The greater inertia of the parts may mean greater overall absorption of pressure and therefore of gas, readings being equal or, in exactly the same way, a lower reading, output pressure of gas being equal. In both cases the surplus gas that goes unread, multiplied by the number of gas meters installed, would mean a clear loss of income for the gas company.

In addition to the production of grids and valves for the gas meters, the masses for injection moulding like those indicated by a and b in **Table 1,** are widely used in the production of seal rings to mount on the supports for the rotating shafts of pumps used for hydrocarbons or acid or basic fluids, or on the supports for sliding pistons in electric or fluid dynamic types of linear actuators. As in the well-known case where tangential speeds of the shafts or pistons are low (lower than 0.1 m/s for example), a situation known as stick-slip may arise: "stick", when elastic energy accumulates on the interface between the two parts in contact but temporarily stationary, followed by "slip" when the previously accumulated energy is released. This cyclic phenomenon entirely disappears at the higher running speeds but, at lower speeds, can cause irregular movement of the transmission shafts and pistons on linear actuators. The more static friction there is in the seal rings, the more marked the stick-slip effect will be.

Another clearly evident characteristic that appears on observing the formulation of the masses for injection moulding **a** and **b** in **Table 1,** is the total absence of recycled materials. This means having to recycle elsewhere the feedheads and other processing waste.

## Purposes of the invention

In the light of the known art here reviewed, the main purpose of the invention is to provide a thermosetting mass for injection moulding to produce thermoformed parts of low static friction that, on an average, remains stable when the parts in contact are sliding one against another for a long time.

A further purpose of the invention is to ensure that a mass for injection moulding possessing the above characteristics, remains unchanged even if it includes a certain percentage by weight of recycled materials consisting of waste from previous moulding processes.

## Summary of the invention

In order to achieve these purposes, subject of the present invention is a mass for injection moulding, wherein its basic formulation is optimized as follows for obtaining injection-moulded elements with a low coefficient of static friction that remains stable during prolonged use:

- phenolic thermosetting resin, from 22% to 28% by weight;
- epoxy resin, from 2% to 6% by weight;
- catalysts, from 0.8% to 1.2% by weight;
- cross-linking agent, from 3% to 7% by weight;
- plasticizing materials, from 0.5% to 2.5% by weight;
- non-hygroscopic lubricating fillers, from 3% to 10% by weight;
- non-hygroscopic, non-lubricating fillers, from 45% to 55% by weight,
- recycled materials, from 5% to 10% by weight,

as described in claim 1.

A further subject of the invention is a method for producing a mass, having the above basic formulation, for injection moulding, said method including the following steps:

- cold grinding of the materials included in the above basic formulation, to form fine particles of a size smaller than

150 $\mu$m;
- mixing the fine particles to form a homogeneous composition;
- hot pressurised amalgam of the homogeneous composition at a temperature between that for softening the resins and that for starting cross-linking;
- cooling the amalgamated product to form the mass for injection moulding;
- grinding the mass for injection moulding to produce granules or a powder for making tablets.

A further subject of the invention is a method for the production of moulded parts from the mass for injection moulding, obtained as described above, said method including the following steps:

- moulding the parts by hot injection or by transfer of the mass for injection moulding, in special moulds heated to a temperature sufficient for cross-linking of the resins used;
- removing the parts from the moulds after a time previously set for cross-linking;
- subjecting the moulded parts to one or more thermal cycles at a previously set temperature for a previously set time and subsequent cooling to complete cross-linking of the resins;
- lapping the sliding surfaces, varying the concentration and grain size of the abrasive in a series of steps lasting for a previously set time.

Further characteristics of the present invention considered as innovative are described in the dependent claims.

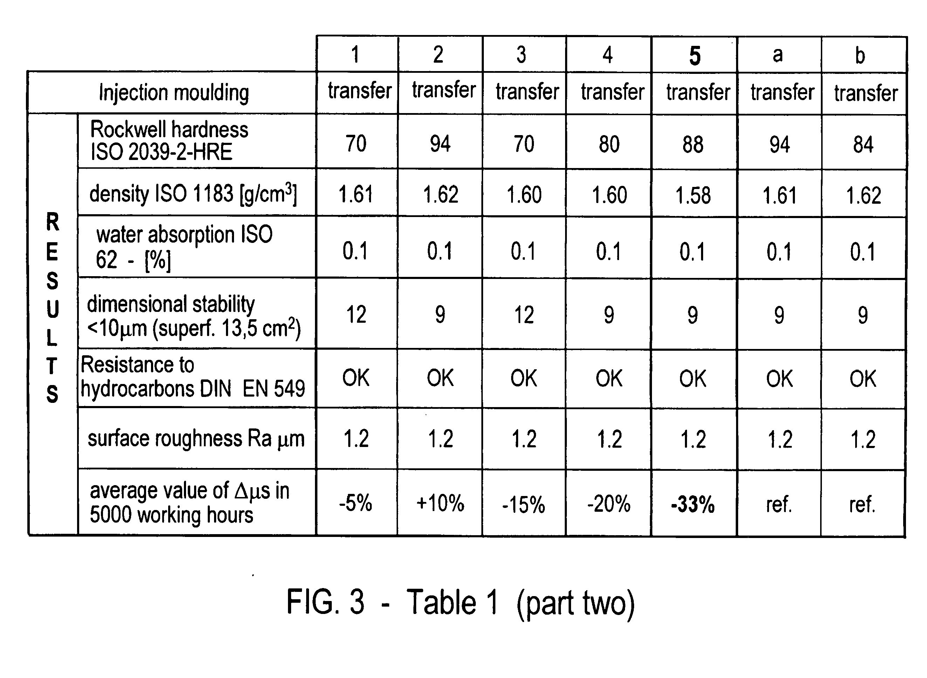

The capacity of a mass for injection moulding, having a formulation that respects the percentage intervals specified above, to achieve its objectives can immediately be seen from the data in the columns of example 5 in **Table 1,** in **Figures 2** and **3 ,** together with the solid curve of the graph in **Figure 1. Table 1** (part one) shows some more examples of formulations of which, however, only the data given in the column of example 4 conform to the percentage intervals indicated in the invention.

With reference to **Figure 1,** the lower solid curve gives the experimental values of the coefficient of static friction $\mu_s$ (and the trend line y(t)) obtained by continuously sliding, one against another, the lapped surfaces of the moulded samples conforming to the invented formulation of example 5, **Table 1** (part one), using the same methods for the test as those used to obtain the values shown on the upper dotted curve relating to the known formulations a on b.

A comparative examination of the curves in **Figure 1** shows that:

- the curve for the coefficient of static friction $\mu_s$(a on b) is always above that of the coefficient of static friction $\mu_s$ (example 5), and the same is true of the respective trend lines y(t). This means that the coefficient of static friction $\mu_s$(example 5) relating to the invented composition, is always less than the coefficient of static friction $\mu_s$(a on b) relating to formulations already known.
- The slopes of the curves of the two trend lines y(t) are positive: in other words both coefficients of static friction are subject to an average increase over a period of time. Such slopes have a value of 0.1 for $\mu_s$(example 5) and 0.15 for $\mu_s$(a on b).
- Initial value of the coefficients of static friction $\mu_s$(example 5) is around 7% less than initial value of $\mu_s$(a on b); this initially low gap, however, does not remain constant during the test but increases to a maximum value where, after 2,000 working hours, the coefficient of static friction $\mu_s$(example 5) is less by about 32% than the corresponding value of $\mu_s$(a on b). As the test proceeds the gap is reduced, then increasing and diminishing to reach a final value of about 23% less. The significant gap between the two $\mu_s$ coefficients, to the total advantage of the invented formulation, over a long period results in a reduced loss of capacity to prevent stick-slip situations compared with known formulations.
- Value of the intercept at the origin of the trend line y(t) of the coefficient of static friction $\mu_s$(example 5) is 0.292; the ultimate value of y(t) after 5,000 hours testing is 0.392. The difference of 0.100 between these values amounts to 34% of the initial value, against 41% of the upper curve. The difference between trend values, lower by 7% in favour of $\mu_s$(example 5), means that the measuring systems realized with the thermosetting composition specified in the present invention accumulate, on the average, a smaller error over a long period. The measurements made are therefore more reliable.
- Comparing the curves of the trend line y(t) shown in the two graphs mention may be made of the percentage difference ($\Delta\mu_s$ %) in the tendency to grow shown on comparing the coefficients of static friction of the two formulations. The percentage difference $\Delta\mu_s$% is calculated as follows:

$$[(\mu_s(\text{example 5}) - \mu_s(\underline{a} \text{ on } \underline{b}))] / \mu_s(\underline{a} \text{ on } \underline{b})\% = [(0.1 - 0.15) / 0.15]\%$$

$$= -33.3\%.$$

This value means that the coefficient of static friction of a moulded part whose composition is that of the present invention is on the average more stable over a period of time by 33.3% in relation to the compositions with which it is usually compared. The result is that measuring systems and/or equipment generally are more accurate and reliable.

The composition of the mass for injection moulding according to the invention may include up to 10% of material recycled from previous processes. This means less industrial waste which in turn means a lower environmental impact.

There is also a small reduction in density compared with presently known formulations. The percentage ranges by weight of the components forming the mass for injection moulding, according to the invention, make a synergic combination whereby, compared with compositions already known, the various elements combine to drastically reduce the average long-term increase of static friction present at the interface between the sliding surfaces of corresponding moulded parts. This synergy is such that not only is surface hardness of these moulded parts maintained at a high level, but recycled material from previous moulding operations can be reused as well.

The peculiarity of the composition according to the invention, can be seen by examining other examples in **Table 1,** marked 1, 2, 3 and 4, namely:

- Examples 1 and 3 show that, in the absence of recycled material, inclusion of a low concentration of polytetrafluoroethylene (PTFE), or more than 6% of epoxy resin in the formulation, in both cases reduces mechanical properties such as surface hardness (measured by the Rockwell:ISO 2039-2 method-HRE).
- Example 2 shows that inclusion of recycled materials in a formulation devoid of epoxy resin and containing phenolic resin in excess of the 28%, drastically increases the ($\Delta\mu_s$) variation of the coefficient of static friction over a period of time.
- Example 4 shows how the formulation in example 3 can be improved regarding both mechanical surface hardness and stability of the coefficient of static friction $\mu_s$, reinstating it within the percentage ranges according to the invention.
- Example 5 presents an exemplary formulation fully inside the percentage ranges according to the invention, optimized regarding both mechanical surface hardness and stability of the static friction coefficient $\mu_s$.

In attempting to achieve the stated purposes, it will be clear from the foregoing how necessary it has been to seek a correct balance among percentages by weight of the components parts forming the mass for injection moulding. Considerable technical difficulties had to be overcome to achieve this balance in a situation where even small percentage variations of some components or the presence or absence of any one of them, could radically alter the rheological properties of the composition and the technical properties of the moulded product. In pursuing this course, the formulation of example 5, **Table 1,** showed a highly surprising reduction (-33% compared with known formulations) in average variations of the coefficient of static friction over a long period. This surprising reduction remains practically unaltered even where small variations occur compared with the exact percentage formulation given in example 5.

Short description of the figures

Further purposes and advantages of the present invention will be made clear by the following detailed description of an example of its realization and by the attached drawings provided for purely explanatory reasons and in no way limitative, wherein:

**Figure 1** shows two comparative curves indicating the coefficients of static friction $\mu_s$ measured every 500 hours, in experimental setups wherein the thermosetting elements o molded elements, obtained respectively from masses for injection moulding according to the known art (upper curve), and according to the present invention (lower curve), are in continuous contact and are made to slide one against another.

**Figure 2** shows part one of a table (**Table 1**) that gives the percentages by weight of the components of some examples of masses for injection moulding; these include known formulations used in the measurements, indicated by the upper dotted curve, and the formulations according to the invention in the lower solid curve, both seen in Figure 1.

**Figure 3** shows part two of **Table 1** which gives the results, for each formulation of a mass for injection moulding in Figure 2, of the measurements of the main physical and mechanical parameters that distinguish the formulation.

In conclusion, the mass for injection moulding, subject of the invention, makes possible realization of thermosetting elements possessing the following characteristics:

- good mechanical resistance together with excellent capacity for surface sliding;
- excellent chemical resistance on exposure to acid, basic, hydrocarbonic, gaseous or liquid solutions (for example, according to DIN EN 549 standards etc.);

- a high degree of dimensional stability;
- minimum absorption of water.

Detailed description of some preferred forms of realizing the invention

The description of the example realized is divided under the following headings
1. Formulation, 2. Processing, 3. Transformation technology, 4. Measurement of the coefficient of static friction.

1. Formulation

With reference to **Figure 2,** the following is a basic formulation for producing masses for injection moulding to make moulded parts with a low coefficient of static friction, highly stable in use extended over a period of time:

- phenolic thermosetting resin, from 22% to 28% by weight;
- cross-linking agent, from 3% to 7% by weight;
- epoxy resin, from 2% to 6% by weight;
- catalysts, from 0.8% to 1.2% by weight;
- plasticisers, from 0.5% to 2.5% by weight;
- non-hygroscopic, lubricating fillers, from 3% to 10% by weight;
- non-hygroscopic, non-lubricating fillers, from 45% to 55% by weight;
- recycled materials, from 5% to 10% by weight.

An optimum formulation that observes these ranges of percentages is given below, related to example 5 in **Table 1** (part one):

- phenolic thermosetting resin, 26% by weight;
- epoxy resin, 4% by weight;
- catalysts, 1.1% by weight;
- cross-linking agent, 5.5% by weight;
- stearates, 1% by weight;
- waxes and paraffin, 1% by weight;
- graphite, 3% by weight;
- coke coal, 48.4% by weight;
- recycled materials, 10% by weight.

A sub-optimum formulation that observes the same ranges of percentages is given below, related to example 4 in **Table 1** (part one):

- phenolic thermosetting resin, 24% by weight;
- epoxy resin, 2% by weight;
- catalysts, 1.1 % by weight;
- cross-linking agent, 4.7% by weight;
- stearates, 1% by weight;
- waxes and paraffin, 1% by weight;
- graphite, 10% by weight;
- coke coal, 46.2% by weight;
- recycled materials, 10% by weight.

With reference to **Figure 3,** in **Table 1** (part two), it will be seen that, by using the formulation for example 5 to produce a mass for injection moulding, the products moulded and suitably processed as will be explained further on, show a $\Delta\mu_s$ variation in static friction, averaging over 5000 working hours, which is 33% lower than the known formulations of comparative examples a on b. The value (dimensionless) of Rockwell hardness (ISO 2039-2-HRE) is 88 which is sufficient for the stated purposes.
Similarly, the sub-optimum formulation of example 4 shows $\Delta\mu_s$ values 20% lower than the comparative examples, and a hardness of 80.
In the formulation of examples given in **Table 1** (part one), the phenolic thermosetting resin is a novolak, a resol, or a novolak and a resol. The epoxy type thermosetting resin may be a modified epoxy resin.
The quantity of cross-linking agent used, mainly hexamethylenetetramine or, generally speaking, secondary or tertiary amines, depends on the number of ortho and para positions available in the thermosetting resins, and on the ultimate degree of final cross-linking required. This can be expressed by the degree of surface hardness of the moulded product, measured as indicated; for example, in the case of a simple novolak of average molecular weight from 3 to 20 monomer units, the quantity of cross-linking agent must not be less than 9 parts by weight for every 100 parts of resin.

The polymerization catalysts normally used are the following: magnesium oxide, magnesium hydroxide, calcium oxide, calcium hydroxide, boric acid, boric amide, other boron compounds and other metal oxides.

Suitable plasticisers are chosen to improve the viscoelastic behaviour in processing and when injection-moulding the final product. Literature on the subject classifies the plasticisers as external or internal; the external plasticisers reduce adhesion to metals, frictioning, and therefore creation of internal heat; the internal plasticisers "dissolve" in the resin, reducing viscosity and injection pressure, improving its homogeneity in the viscoelastic step. Plasticisers such as alcohols, esters and the amides of fatty acids possess a more polar chemical structure; they are more easily solubilized by the product and are therefore classified as internal. Fatty acid salts such as calcium stearate, magnesium stearate etc., lie between internal and external. Paraffin and waxes having no polar nature are classified as external.

Quantities and types of catalysts and plasticisers are chosen according to the type of processing, to the rheological properties of the product desired, typically viscoelastic, such as reaction times, torque, etc., and above all considering what will be its ultimate type of transformation. For example, if the product is moulded by compression, only the minimum quantity indicated for plasticisers, together with efficient catalysts (calcium hydroxide, etc.) will be needed, since inside the mould the material slides to a negligible degree and internal friction is minimum. The opposite example applies if injection moulding is used as, in that case, the material must slide to the maximum inside the mould.

Non-hygroscopic lubricating fillers include graphites (mineral or synthetic) and thermoplastics such as polytetrafluoroethylene (PTFE); an excessive quantity of graphites, exceeding 15% by weight, or over 3% by weight of PTFE, damages the mechanical properties of the moulded part, while if too little of these two components is used, the moving parts may slide less easily.

Mineral coal (coke) or synthetic coal are the non-hygroscopic and non-lubricating fillers: other fillers, such as the poliolefins (polyethylene, polypropylene, etc., the polyamides (nylon, Kevlar etc.) or the copolymers (styrene, butadiene, nitrous, etc.), can be added by weight to improve mechanical properties and reduce costs. It must in any case be emphasised that an excess of thermoplastics prejudices the dimensional stability of the final product.

Without in any way limiting the invention, all the examples given in **Table 1** (part one) were formulated using micronized raw materials of a size below 100 $\mu$m: hexamethylentetramine for cross-linking, calcium hydroxide as a catalyst and, as plasticisers, calcium and zinc stearates, diamide of ethylendiamine, a mixture of mono- and tri-glicerides C16-C18 and modified melamine.

### 2. Processing system

The compound to be processed is mechanically pre-mixed when cold to ensure that all the ingredients are properly homogenized, and then hot-processed. Hot-processing can be done by extrusion or by calendering. If by extrusion, the extruder can operate with one screw (Buss model) or with two screws; in either case the length-diameter ratio of the extruding screw is between 5 and 15. The screw has appropriate areas for mixing, degassing and temperature control. If processing is by calendering, this may be continuous or discontinuous; in either case the ratio between tangential speeds of the two calendering rollers is from 1.05 to 1.50 and the distance between them may be from 0.5 to 2 mm. Whether processing is done by extrusion or by calendering, it is of fundamental importance to ensure that, during processing, the temperature of the product remains between 50 and 130°C, namely higher than the temperature needed to soften the resin, and lower than that at which cross-linking would take place too quickly thereby risking a lack of control over the final product. After cooling, the material obtained is ground to the desired particle size, and homogenized.

Without limiting the invention, the mass for injection moulding, whose basic formulation is that for the examples given in Table 1, (part one), was obtained by continuous calendering of the compound previously mixed when cold, as explained above, setting a ratio of between 1.10 and 1.40 for the tangential speeds of the two calendering rollers, and setting the surface temperature of the front, faster, roller between 50 and 70°C, ends included, and the surface temperature of the rear, slower, roller between 90 and 130°C, ends included.

### 3. Transformation technology

The mass for injection moulding obtained as described above, is a semifinished product for making moulded parts by any known technical process, such as any of the possible variations of compression, injection and transfer. Pressure levels on closing the dies may reach several hundred bars (1 bar = $10^5$ Pa); temperatures set at die surfaces lie between 130 and 180°C, relating the baking stage of the injected material to the thickness of the moulded product, a ratio which the relevant literature states as being typically 60 seconds per millimetre of thickness.

The moulded parts are subjected to thermal cycles in order to stabilize them and ensure completion of any unfinished bonding processes, thus guaranteeing adequate dimensional stability and uniform performance of all production lots. Surface hardness (ISO 2039-HRE) of the moulded parts increases slightly during stabilization, usually from 4 to 10 points according to the temperature reached, typically between 80 and 160°C; cycle times also increase, usually between 24 and 96 hours. During a thermal cycle the temperature of the moulded part rises slowly to the maximum level and is subsequently made to fall to ambient level.

Stabilization having been completed, the operative surface of each moulded part is lapped to give it the desired shape which may be flat, concave or convex. The abrasives most widely used are aluminium, chrome and iron oxides, silicon carbide (carborundum), boron carbide, glass, pumice, powdered diamond, etc. Parameters for the lapping process, namely granulometry of the abrasive, its percentage concentration by volume in the abrasive powder and processing times all vary according to the ultimate surface roughness (Ra) and hardness of the product concerned on each separate occasion. For example, if an Ra surface roughness of 1.20 $\mu$m is required for a product of average hardness, the best lapping process will take several dozen seconds, varying granular size of the abrasive in successive stages from 200 to 400 mesh (from 74 to 38 $\mu$m) for a volumetric concentration of between 2 and 15%.

As already emphasised, dimensional stability of the moulded parts over time is considered of fundamental importance since it affects stability of the coefficient of friction when the product is in use. There are various tests for checking a part's resistance to deformation, the most widely used being cycles of thermal shock spread over intervals of time, immersion in fluids such as acid, basic, alcoholic, hydrocarbonic solutions, or others still, at different temperatures. For example, if the part's working surface is flat, and measures between 10 and 100 cm$^2$, an acceptable amount of deformation of the part's lapped plane would have to be less than 10 $\mu$m.

Without any limit to the invention, the mass for injection moulding, having a formulation the same as that of the examples given in Table 1 (part one), then to be made into tablets at a temperature between 40 and 55°C, is used to mould the required products by transfer technique, so optimizing cycle times and the quality of the moulded parts. Mould temperatures are between 140 and 170°C, with injection pressures between 90 and 150 bars (between 9 and 15 MPa) and cross-linking times between 30 and 60 seconds per millimetre of thickness. With regard to post-moulding treatments, each moulded article is given a single cycle of stabilization which consists in heating it to a temperature between 120 and 160°C for a time between 24 and 48 hours, followed by lapping optimized as previously explained.

4. Measuring the coefficient of static friction

As stated above, simulation of how moulded products perform over time, with reference to the examples in **Table 1** (part one), and to example 5 in particular, is carried out using the same experimental set-ups and the same operative criteria as set forth in the introduction, relating to the test made on sliding parts inside gas meters of class G4. An explanation is now given of more or less well-known methods of measuring static friction and its variations over long periods of time.

For this measuring method several sample units were prepared for sliding on a plane. The plane and the single sample units were made by injection moulding using the basic formulation of example 5.

The plane is initially horizontal and the sample units are longitudinally aligned upon it. The units are mechanically connected to the rotating shaft of a first motor, kept under control to vary the speed of rotation and its duration. The rotating shaft is perpendicular to the plane on which the sample units are laid. Means are also provided to exert a previously set pressure on the face of the sample unit placed in contact with the supporting plane. Continuous rotation of the shaft of the first motor, and therefore of the sample unit, generates sliding friction on the interface with the supporting plane, so simulating operative reality and causing wear on the parts.

Static friction is measured by a second motor fitted with a shaft able to rotate very slowly. This second motor includes means for controlling the speed of rotation and for instantly starting and stopping it. The shaft of the second motor is connected to the plane supporting the samples so as to be orthogonal to the shaft of the first motor and to the longitudinal alignment of the row of sample units. Prior to each measurement, taken at intervals of 500 hours of testing, the connection to the first motor is broken and the shaft of the second motor is made to rotate at a constant speed of about 1 degree per minute, so that the supporting plane is inclined to the same extent. Due to inclination of the plane, the sample units will begin to slide downward starting from a certain angle $\alpha$ that operatively depends on the coefficient of static friction between the parts in contact. Angle $\alpha$ is that subtended from the normal line to the supporting plane in relation to the vertical. It is shown that the coefficient of static friction $\mu_s$ is given by the function $\mu_s = \tan(\alpha)$ that expresses the ratio between the modules of forces respectively perpendicular to the plane and parallel to it. Angle $\alpha$ is measured, at an approximation of $\pm$ 0.5°, when the sample unit being tested begins to slide. In order to avoid measuring errors, care must be taken when managing the samples to avoid touching the surfaces being measured with the fingers. The results are given on the lower solid curve in **Figure 1;** values represent the averages of about ten units measured.

Based on the description provided of a preferred example of realization, it is clear that some changes can be made by technical experts in the field without thereby departing from the sphere of the invention, as will appear from the following claims.

**Claims**

1. Mass for injection moulding, wherein its base formulation is optimized as follows for obtaining injection-moulded elements with a low coefficient of static friction that remains stable during prolonged use:

   - phenolic thermo-setting resin, from 22% to 28% by weight;
   - epoxy resin, from 2% to 6% by weight;
   - catalyst, from 0.8% to 1.2% by weight;
   - cross-linking agent, from 3% to 7% by weight;
   - plasticizing materials, from 0.5% to 2.5% by weight;
   - non-hygroscopic lubricating filler materials, from 3% to 10% by weight;
   - non-hygroscopic and non-lubricating filler materials from 45% to 55% by weight;
   - recycled materials from 5% to 10% by weight.

2. Mass for injection moulding as in claim 1 or 2, wherein said catalysts may be chosen from among the following: magnesium oxide, magnesium hydroxide, calcium oxide, calcium hydroxide, boric acid, boric amid and other boron based compounds, other metal oxides.

3. Mass for injection moulding as in claim 1 or 2, wherein said cross-linking agent is hexamethylenetetramine or secondary or tertiary amines.

4. Mass for injection moulding as in any one preceding claim, wherein said phenolic thermosetting resin is a novolak, or a resol, or a novolak and a resol.

5. Mass for injection moulding as in any one of the preceding claims, wherein said plasticizing materials may be chosen from among the following: calcium and zinc stearates, ethylendiamine diamide, a mixture of mono- and tri-glycerides C16-C18, modified melamine.

6. Mass for injection moulding as in any one of the preceding claims, wherein said filler materials may be chosen from among the following: waste from a previous injection-moulding process, polyamide polyolefins, styrene copolymers, butadienic copolymers, nitrous copolymers.

7. Method for producing a mass for injection moulding according to any one of the preceding claims, wherein the following steps are included:

   - cold grinding of the materials included in said base formulation, to form fine particles of a size smaller than 150 $\mu$m;
   - mixing of the fine particles to form a homogeneous composition;
   - hot amalgam under pressure of the homogenous composition at a temperature between that for softening the resins and that for starting cross-linking;
   - cooling the amalgamated product to form the mass for injection moulding;
   - grinding the mass for injection moulding to produce granules or a powder for making tablets.

8. Method for producing the mass for injection moulding according to claim 7, wherein the hot amalgam step under pressure is a continuous calendering process at a ratio of from 1.10 to 1.40 between the tangential speeds of the two calendering rollers, surface temperature of the front faster roller being between 50 and 70°C and surface temperature of the rear slower roller being between 90 and 130°C.

9. Method for producing injection-moulded parts according to claim 7 or 8, wherein the following steps are included:

   - moulding of the parts by hot injection or transfer of the mass for injection moulding in special moulds heated to a temperature that permits cross-linking of the resins used;
   - extraction of the parts from the moulds after a previously set time for cross-linking;
   - execution of one or more thermal cycles on the moulded parts at a previously set temperature to heat them for a previously set time and subsequent cooling to complete cross-linking of the resins used;
   - lapping the surface concerned, varying the concentration and grain size of the abrasive in sequential steps for a previously set time.

**Patentansprüche**

1. Formmasse, **dadurch gekennzeichnet, dass** diese folgende Grundformulierung aufweist, die zur Erzeugung von Formteilen mit einem geringen und bei anhaltender Betätigung stabilen statischen Reibungskoeffizient optimiert ist:

   - wärmehärtbares Phenolharz mit einem Gewichtsanteil zwischen 22% und 28%;
   - Epoxidharz mit einem Gewichtsanteil zwischen 2% und 6%;
   - Katalysatoren mit einem Gewichtsanteil zwischen 0,8% und 1,2%;
   - Vernetzungsmittel mit einem Gewichtsanteil zwischen 3% und 7%;
   - Weichmacher mit einem Gewichtsanteil zwischen 0,5% und 2,5%;
   - nicht hygroskopische, schmierende Füllstoffe mit einem Gewichtsanteil zwischen 3% und 10%;
   - nicht hygroskopische und nicht schmierende Füllstoffe mit einem Gewichtsanteil zwischen 45% und 55%;
   - Recycling-Materialien mit einem Gewichtsanteil zwischen 5% und 10%.

2. Die Formmasse nach Anspruch 1, **dadurch gekennzeichnet, dass** die genannten Katalysatoren unter folgenden auswählbar sind: Magnesiumoxid, Magnesiumhydroxid, Kalziumoxid, Kalziumhydroxid, Borsäure, Boramid und weitere borhaltige Verbindungen, weitere Metalloxide.

3. Die Formmasse nach Anspruch 1 oder 2, **dadurch gekennzeichnet, dass** das genannte Vernetzungsmittel Hexamethylentetramin oder sekundäre oder tertiäre Amine ist.

4. Die Formmasse nach einem beliebigen der vorangehenden Ansprüche, **dadurch gekennzeichnet, dass** das genannte wärmehärtbare Phenolharz ein Novolak, oder ein Resol, oder ein Novolak und ein Resol ist.

5. Die Formmasse nach einem beliebigen der vorangehenden Ansprüche, **dadurch gekennzeichnet, dass** die genannten Vernetzungsmittel unter folgenden auswählbar sind: Kalzium- und Zinkstearate, Diamin des Ethylendiamins, Mischung aus Mono- und Triglyceriden C16-C18, modifiziertes Melamin.

6. Die Formmasse nach einem beliebigen der vorangehenden Ansprüche, **dadurch gekennzeichnet, dass** die genannten Füllmittel unter folgenden auswählbar sind: Ausschuss eines vorherigen Formpressverfahrens, Polyamid-Polyolefine, Styrol-Copolymere, Butadien-Copolymere, Nitrit-Copolymere.

7. Verfahren zur Herstellung einer Formmasse nach einem beliebigen der vorangehenden Ansprüche, **dadurch gekennzeichnet, dass** es folgende Arbeitsschritte umfasst:

   - Kaltmahlen der in der genannten Grundformulierung einbezogenen Materialien, wodurch feine Partikel mit einer unter 150 $\mu$m liegenden Größe entstehen;
   - Vermischung der feinen Partikel, wodurch eine homogenen Zusammensetzung entsteht;
   - Vermischung bei Hitze und unter Druck der homogenen Zusammensetzung bei einer Temperatur, die zwischen der zur Erweichung der Harze und der des Vernetzungsbeginns liegt;
   - Kühlung des vermischten Produkts, wodurch die Formmasse entsteht;
   - Mahlen der Formmasse, wodurch Granulat oder Pulver zum Tablettieren entsteht.

8. Das Verfahren zur Herstellung einer Formmasse nach Anspruch 7, **dadurch gekennzeichnet, dass** der Arbeitsschritt der Vermischung bei Hitze und unter Druck eine kontinuierliche Kalandrierung ist mit einem Verhältnis zwischen den Tangentialgeschwindigkeiten der zwei Kalanderwalzen, das zwischen 1,10 und 1,40 liegt, wobei die Temperatur an der Oberfläche der schnelleren Vorderwalze zwischen 50 und 70°C liegt und die Temperatur an der Oberfläche der langsameren Hinterwalze zwischen 90 und 130°C liegt.

9. Verfahren zur Herstellung von Formteilen nach Anspruch 7 oder 8, **dadurch gekennzeichnet, dass** es folgende Arbeitsschritte umfasst:

   - Herstellung der Formteile aus der genannten Formmasse durch Spritz- oder Heißguss in eigens dazu bestimmte, erhitzte Formen bei einer Temperatur, die die Vernetzung der angewendeten Harze ermöglicht;
   - Entfernung der Formteile aus den Formen nach einem vorgegebenen Vernetzungszeitraum;
   - Erwärmung der Formteilen in einem oder mehreren Heizzyklen bei einer vorgegebenen Heiztemperatur für einen vorgegebenen Zeitraum und darauffolgende Kühlung, um die Vernetzung der angewandten Harze zu vollenden;

- Läppen der betreffenden Oberfläche, wobei die Konzentration und die Korngrößenverteilung des Schleifmittels in Folgeschritten vorgegebener Dauer geändert werden.

**Revendications**

1.  Masse de moulage **caractérisée par le fait qu'**elle possède la formulation de base suivante optimisée pour obtenir des éléments moulés avec un faible coefficient de friction statique, stable dans l'exercice prolongé :

    - résine thermodurcissable de type phénolique comprise entre 22 % et 28 % du poids ;
    - résine époxy comprise entre 2 % et 6 % du poids ;
    - catalyseurs compris entre 0,8 % et 1,2 % du poids;
    - agent de réticulation compris entre 3 % et 7 % du poids ;
    - matériaux de plastification compris entre 0,5 % et 2,5 % du poids ;
    - matériaux de remplissage non hygroscopiques lubrifiants compris entre 3 % et 10 % du poids ;
    - matériaux de remplissage non hygroscopiques et non lubrifiants compris entre 45 % et 55 % du poids ;
    - matériaux de recyclage compris entre 5% et 10 % du poids.

2.  Masse de moulage selon la revendication 1, **caractérisée par le fait que** lesdits catalyseurs peuvent être sélectionnés parmi les suivants : oxyde de magnésium, hydroxyde de magnésium, oxyde de calcium, hydroxyde de calcium, acide borique, amide borique et autres composés à base de bore, autres oxydes métalliques.

3.  Masse de moulage selon la revendication 1 ou 2, **caractérisée par le fait que** ledit agent de réticulation est l'hexaméthylènetétramine ou des amines secondaires ou tertiaires.

4.  Masse de moulage selon l'une des revendications précédentes, **caractérisée par le fait que** ladite résine thermodurcissable de type phénolique est une novolaque ou un résol, ou bien une novolaque et un résol.

5.  Masse de moulage selon l'une des revendications précédentes, **caractérisée par le fait que** lesdits matériaux de plastification peuvent être sélectionnés parmi les suivants : stéarates de calcium et zinc, diamide de l'éthylènediamine, mélange de mono et triglycérides C16-C18, mélamine modifiée.

6.  Masse de moulage selon l'une des revendications précédentes, **caractérisée par le fait que** lesdits matériaux de remplissage peuvent être sélectionnés parmi les suivants : déchets d'un moulage précédent, polyoléfines polyamides, copolymères de styrène, copolymères de butadiène, copolymères de nitrite.

7.  Méthode de production d'une masse de moulage selon l'une des revendications précédentes, **caractérisée par le fait qu'**elle comprend les étapes suivantes :

    - broyage à froid des matériaux qui composent ladite formulation de base , pour former des particules fines ayant des dimensions inférieures à 150 $\mu$m ;
    - mélange des particules fines pour former une composition homogène ;
    - amalgame à chaud sous pression de la composition homogène à une température comprise entre celle de ramollissement des résines et celle de début de réticulation ;
    - refroidissement du produit amalgamé pour former la masse de moulage ;
    - broyage de la masse de moulage pour former des granulés ou de la poudre pour pastillage.

8.  Méthode de production de la masse de moulage selon la revendication 7, **caractérisée par le fait que** l'étape d'amalgame à chaud sous pression est un calandrage en continu avec un rapport entre les vitesses tangentielles des deux rouleaux de calandrage compris entre 1,10 et 1,40, la température sur la surface du rouleau avant, plus rapide, étant comprise entre 50 et 70°C et la température sur la surface du rouleau arrière, plus lent, étant comprise entre 90 et 130 °C.

9.  Méthode de production de pièces moulées selon la revendication 7 ou 8, **caractérisée par le fait qu'**elle comprend les étapes suivantes :

    - moulage des pièces par injection ou par transfert à chaud de ladite masse de moulage dans des moules spéciaux chauffés à une température permettant la réticulation des résines utilisées ;

- extraction des pièces des moules après un délai de réticulation prédéfini ;
- exécution d'un ou plusieurs cycle thermiques à une température de chauffe prédéfinie sur les pièces moulées pendant un délai prédéfini et refroidissement suivant pour terminer la réticulation des résines utilisées ;
- lapping de la surface concernée en modifiant la concentration et la granulométrie de l'abrasif par étapes séquentielles de durée prédéfinie.

FIG. 1

EP 2 275 488 B1

|  |  | Realisable examples | | | | | Comparative examples | |
|---|---|---|---|---|---|---|---|---|
|  |  | 1 | 2 | 3 | 4 | 5 | a | b |
| F O R M U L A T I O N | phenolic resin novolak | 30.0 | 30.0 | 22.0 | 24.0 | 26.0 | 30.0 | 26 |
|  | cross-linking agent | 5.5 | 5.5 | 5.5 | 4.7 | 5.5 | 5.5 | 4.5 |
|  | epoxy resin | 0.0 | 0.0 | 8 | 2 | 4 | 0.0 | 0.0 |
|  | catalysts | 1.1 | 1.1 | 1.1 | 1.1 | 1.1 | 1.1 | 1.1 |
|  | strearates | 1.0 | 1.0 | 1,0 | 1.0 | 1.0 | 1.0 | 1.0 |
|  | waxes and paraffins | 1.0 | 1.0 | 1.0 | 1.0 | 1.0 | 1.0 | 1.0 |
|  | polytetrafluroethylene | 0.2 | 0.0 | 0.0 | 0.0 | 0.0 | 0.0 | 0.0 |
|  | graphite | 3.0 | 3.0 | 3.0 | 10 | 3.0 | 3.0 | 10.0 |
|  | coke | 58.2 | 48.4 | 58.4 | 46.2 | 48.4 | 58.4 | 56.4 |
|  | recycled materials | 0.0 | 10 | 0.0 | 10 | 10 | 0.0 | 0.0 |
|  | total | 100 | 100 | 100 | 100 | 100 | 100 | 100 |
|  | process | calender | calender | calender | calender | calender | calender | calender |

FIG. 2 - Table 1 (part one)

EP 2 275 488 B1

| | Injection moulding | 1 transfer | 2 transfer | 3 transfer | 4 transfer | **5** transfer | a transfer | b transfer |
|---|---|---|---|---|---|---|---|---|
| **R E S U L T S** | Rockwell hardness ISO 2039-2-HRE | 70 | 94 | 70 | 80 | 88 | 94 | 84 |
| | density ISO 1183 [g/cm$^3$] | 1.61 | 1.62 | 1.60 | 1.60 | 1.58 | 1.61 | 1.62 |
| | water absorption ISO 62 - [%] | 0.1 | 0.1 | 0.1 | 0.1 | 0.1 | 0.1 | 0.1 |
| | dimensional stability <10μm (superf. 13,5 cm$^2$) | 12 | 9 | 12 | 9 | 9 | 9 | 9 |
| | Resistance to hydrocarbons DIN EN 549 | OK | OK | OK | OK | OK | OK | OK |
| | surface roughness Ra μm | 1.2 | 1.2 | 1.2 | 1.2 | 1.2 | 1.2 | 1.2 |
| | average value of Δμs in 5000 working hours | -5% | +10% | -15% | -20% | **-33%** | ref. | ref. |

FIG. 3 - Table 1 (part two)

EP 2 275 488 B1